(19) Europäisches Patentamt / European Patent Office / Office européen des brevets

(11) **EP 4 233 018 B1**

(12) **FASCICULE DE BREVET EUROPEEN**

(45) Date de publication et mention de la délivrance du brevet:
**03.09.2025 Bulletin 2025/36**

(21) Numéro de dépôt: **21807184.3**

(22) Date de dépôt: **19.10.2021**

(51) Classification Internationale des Brevets (IPC):
**G06V 20/69** *(2022.01)*     **G06V 10/82** *(2022.01)*
**G06F 18/2413** *(2023.01)*

(52) Classification Coopérative des Brevets (CPC):
**G06V 20/698; G06F 18/24147; G06V 10/82;
G06V 30/19173**

(86) Numéro de dépôt international:
**PCT/FR2021/051818**

(87) Numéro de publication internationale:
**WO 2022/084617 (28.04.2022 Gazette 2022/17)**

(54) **PROCÉDÉ DE CLASSIFICATION D'UNE IMAGE D'ENTRÉE REPRÉSENTANT UNE PARTICULE DANS UN ÉCHANTILLON**

VERFAHREN ZUR KLASSIFIZIERUNG EINES EINGABEBILDES MIT EINEM PARTIKEL IN EINER PROBE

METHOD FOR CLASSIFYING AN INPUT IMAGE CONTAINING A PARTICLE IN A SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.10.2020 FR 2010740**

(43) Date de publication de la demande:
**30.08.2023 Bulletin 2023/35**

(73) Titulaires:
- **BIOMERIEUX**
  **69280 Marcy-L'Etoile (FR)**
- **Bioaster**
  **69007 Lyon (FR)**

(72) Inventeurs:
- **MAHÉ, Pierre**
  **38250 LANS EN VERCORS (FR)**
- **EL AZAMI, Meriem**
  **69210 L ARBRESLE (FR)**
- **DEGOUT-CHARMETTE, Elodie**
  **01600 TOUSSIEUX (FR)**
- **SEDAGHAT, Zohreh**
  **69350 LA MULATIERE (FR)**
- **JOSSO, Quentin**
  **69003 LYON (FR)**
- **ROL, Fabian**
  **38290 LA VERPILLIERE (FR)**

(74) Mandataire: **Regimbeau**
**20, rue de Chazelles**
**75847 Paris Cedex 17 (FR)**

(56) Documents cités:
**EP-A1- 3 252 455**     **CN-A- 110 458 137**

- **SRINIVAS UMAMAHESH ET AL: "Simultaneous Sparsity Model for Histopathological Image Representation and Classification", IEEE TRANSACTIONS ON MEDICAL IMAGING, IEEE, USA, vol. 33, no. 5, 1 May 2014 (2014-05-01), pages 1163 - 1179, XP011546118, ISSN: 0278-0062, [retrieved on 20140422], DOI: 10.1109/ TMI.2014.2306173**
- **CHATTERJEE OINDRILA ET AL: "Use of Statistical Methods for Dimensionality Reduction in Hand Shape Identification Employing Radon Transform and Collaborative Representation Based Classification", 2014 INTERNATIONAL CONFERENCE ON ELECTRONIC SYSTEMS, SIGNAL PROCESSING AND COMPUTING TECHNOLOGIES, IEEE, 9 January 2014 (2014-01-09), pages 305 - 310, XP032570258, DOI: 10.1109/ICESC.2014.58**

EP 4 233 018 B1

## Description

DOMAINE TECHNIQUE GENERAL

La présente invention concerne le domaine de l'acquisition optique de particules biologiques. Les particules biologiques peuvent être des microorganismes tels que des bactéries, des champignons ou des levures par exemple. Il peut également s'agir de cellules, organismes multicellulaires, ou toute autre particule de type particule polluante, poussière.

L'invention trouve une application particulièrement avantageuse pour analyser l'état d'une particule biologique, par exemple pour savoir l'état métabolique d'une bactérie suite à l'application d'un antibiotique. L'invention permet, par exemple, de réaliser un antibiogramme d'une bactérie.

ETAT DE L'ART

Un antibiogramme est une technique de laboratoire visant à tester le phénotype d'une souche bactérienne vis-à-vis d'un ou plusieurs antibiotiques. Un antibiogramme est classiquement réalisé par culture d'un échantillon contenant des bactéries et un antibiotique.

La demande de brevet européen N° 2 603 601 décrit une méthode pour réaliser un antibiogramme en visualisant l'état des bactéries après une durée d'incubation en présence d'un antibiotique. Pour visualiser les bactéries, les bactéries sont marquées par des marqueurs fluorescents permettant de révéler leurs structures. La mesure de la fluorescence des marqueurs permet alors de déterminer si l'antibiotique a agi efficacement sur les bactéries.

Le processus classique pour déterminer les antibiotiques efficaces sur une souche bactérienne consiste à réaliser un prélèvement contenant ladite souche (e.g. sur un patient, un animal, un lot alimentaire, etc.) puis à transmettre le prélèvement à un centre d'analyse. Lorsque le centre d'analyse réceptionne le prélèvement, il procède tout d'abord à la culture de la souche bactérienne pour obtenir au moins une colonie de celle-ci, culture comprise entre 24 heures et 72 heures. Il prépare ensuite à partir de cette colonie plusieurs échantillons comprenant des antibiotiques différents et/ou des concentrations d'antibiotiques différentes, puis met à nouveau les échantillons à incuber. Après une nouvelle durée de culture comprise également entre 24 et 72 heures, chaque échantillon est analysé manuellement pour déterminer si l'antibiotique a agi efficacement. Les résultats sont alors retransmis au praticien pour appliquer l'antibiotique et/ou la concentration d'antibiotique le plus efficace.

Cependant, le processus de marquage est particulièrement long et complexe à réaliser et ces marqueurs chimiques ont un effet cytotoxique sur les bactéries. Il s'ensuit que ce mode de visualisation ne permet pas d'observer les bactéries à plusieurs instants de la culture des bactéries, d'où la nécessité d'utiliser un temps de culture suffisamment long, de l'ordre de 24 à 72 heures, pour garantir la fiabilité de la mesure. D'autres méthodes de visualisation de particules biologiques utilisent un microscope, permettant une mesure non destructive d'un échantillon.

La microscopie holographique numérique ou DHM (Digital Holographie Microscopy) est une technique d'imagerie permettant de s'affranchir des contraintes de profondeur de champ de la microscopie optique classique. Schématiquement, elle consiste à enregistrer un hologramme formé par l'interférence entre les ondes lumineuses diffractées par l'objet observé et une onde de référence présentant une cohérence spatiale. Cette technique est décrite dans l'article de revue de Myung K.Kim intitulé « Principles and techniques of digital holographie microscopy » publié dans SPIE Reviews Vol. 1, N°I, Janvier 2010.

Récemment, il a été proposé d'utiliser la microscopie holographique numérique pour identifier des micro-organismes de manière automatisée. Ainsi, la demande internationale WO2017/207184 décrit une méthode d'acquisition d'une particule intégrant une simple acquisition sans focalisation associée à une reconstruction numérique de la focalisation, permettant d'observer une particule biologique en limitant le temps d'acquisition.

Typiquement, cette solution permet de détecter les modifications structurelles d'une bactérie en présence d'un antibiotique après une incubation de seulement une dizaine de minute, et sa sensibilité au bout de deux heures (détection de la présence ou de l'absence d'une division ou d'un motif codant la division) contrairement au processus classique précédemment décrit qui peut prendre plusieurs jours. En effet, les mesures étant non destructives, il est possible de réaliser des analyses très tôt dans le processus de culture sans risquer de détruire l'échantillon et donc de prolonger le temps d'analyse.

Il même est possible de suivre une particule sur plusieurs images successives de sorte à former un film représentant l'évolution d'une particule au cours du temps (puisque les particules ne sont pas altérées après la première analyse) afin de visualiser son comportement, par exemple sa vitesse de déplacement ou son processus de division cellulaire.

On comprend donc que le procédé de visualisation donne d'excellents résultats. La difficulté tient dans l'interprétation en elle-même de ces images ou ce film si l'on souhaite par exemple conclure sur la susceptibilité d'une bactérie à l'antibiotique présent dans l'échantillon.

Diverses techniques ont été proposées allant du simple comptage de bactéries au cours du temps à l'analyse dit morphologique visant à détecter par analyse d'image des « configurations » particulières. Par exemple, lorsqu'une bactérie se prépare à la division, il apparait deux pôles dans la distribution, bien avant la division elle-même qui se traduit par deux portions distinctes de la distribution.

Il a été proposé dans l'article Choi et al. 2014 de combiner les deux techniques pour évaluer un effet antibiotique. Cependant, comme souligné par les auteurs, leur approche nécessite une calibration très fine d'un certain nombre de seuils qui dépendent fortement de la nature des changements morphologiques provoqués par les antibiotiques.

Plus récemment, l'article Yu et al. 2018 décrit une approche basée sur l'apprentissage profond (deep learning). Les auteurs proposent d'extraire les caractéristiques morphologiques ainsi que des caractéristiques liées au mouvement des bactéries au moyen d'un réseau de neurones à convolution (Convolutional Neural Network, CNN). Cette solution s'avère cependant d'une part très lourde en termes de ressources informatique, et requiert une vaste base d'images d'apprentissage pour entraîner le CNN.

SRINIVAS UMAMAHESH ET AL: "Simultaneous Sparsity Model for Histopathological Image Representation and Classification", IEEE TRANSACTIONS ON MEDICAL IMAGING, IEEE, USA, vol. 33, no. 5, 1 mai 2014 (2014-05-01), pages 1163-1179, XP011546118, ISSN: 0278-0062, DOI: 10.1109/TMI.2014.2306173 divulgue un procédé de classification d'au moins une image d'entrée représentant une particule cible dans un échantillon, le procédé comprend une étape d'extraction d'un vecteur de caractéristiques de ladite particule cible et une étape de classification de ladite image d'entrée en fonction dudit vecteur de caractéristiques extrait.

Le problème technique objectif de la présente invention est, par conséquent, de pouvoir disposer d'une solution à la fois plus performante et plus légère de classification d'images d'une particule biologique.

PRESENTATION DE L'INVENTION

Selon un premier aspect, la présente invention concerne un procédé de classification d'au moins une image d'entrée représentant une particule cible dans un échantillon selon la revendication 1.

Selon des caractéristiques avantageuses et non limitatives :
Les particules sont représentées d'une manière homogène dans l'image d'entrée et dans chaque image élémentaire, en particulier centrées et alignées selon une direction prédéterminée.

Le procédé comprend une étape (a) d'extraction de ladite image d'entrée d'une image globale de l'échantillon, de sorte à représenter ladite particule cible de ladite manière homogène.

L'étape (a) comprend la segmentation de ladite image globale de sorte à détecter ladite particule cible dans l'échantillon, puis le recadrage de l'image d'entrée sur ladite particule cible détectée.

L'étape (a) comprend l'obtention de ladite image globale à partir d'une image en intensité de l'échantillon acquise par un dispositif d'observation.

L'étape (c) est mise en œuvre au moyen d'un classifieur, le procédé comprenant une étape (a0) d'apprentissage, par des moyens de traitement de données d'un serveur, des paramètres dudit classifieur à partir d'une base d'apprentissage de vecteurs/matrices de caractéristiques déjà classifiées de particules dans un échantillon.

Ledit classifieur est choisi parmi une machine à vecteur de support, un algorithme des k plus proches voisins, ou un réseau de neurones à convolution.

L'étape (c) comprend une réduction du nombre de variables du vecteur de caractéristiques au moyen de l'algorithme t-SNE.

Le procédé est un procédé de classification d'une séquence d'images d'entrée représentant ladite particule cible dans un échantillon au cours du temps, dans lequel l'étape (b) comprend l'obtention d'une matrice de caractéristiques de ladite particule cible en concaténant les vecteurs de caractéristiques extraits pour chaque image d'entrée de ladite séquence.

Selon un deuxième aspect, est proposé un système de classification d'au moins une image d'entrée représentant une particule cible dans un échantillon selon la revendication 10.

Selon des caractéristiques avantageuses et non limitatives, le système comprend en outre un dispositif d'observation de ladite particule cible dans l'échantillon.

Selon un troisième et un quatrième aspect sont proposés un produit programme d'ordinateur comprenant des instructions de code pour l'exécution d'un procédé selon le premier aspect de classification d'au moins une image d'entrée représentant une particule cible dans un échantillon ; et un moyen de stockage lisible par un équipement informatique sur lequel un produit programme d'ordinateur comprend des instructions de code pour l'exécution d'un procédé selon le premier aspect de classification d'au moins une image d'entrée représentant une particule cible dans un échantillon.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'une architecture pour la mise en œuvre du procédé selon l'invention ;
- la figure 2 représente un exemple de dispositif d'observation de particules dans un échantillon utilisé dans un mode de réalisation préféré du procédé selon l'invention ;
- la figure 3a illustre l'obtention de l'image d'entrée dans un mode de réalisation du procédé selon l'invention ;
- la figure 3b illustre l'obtention de l'image d'entrée dans un mode de réalisation préféré du procédé selon l'invention ;

- la figure 4 représente les étapes d'un mode de réalisation préféré du procédé selon l'invention ;
- la figure 5a représente un exemple de dictionnaire d'images élémentaires utilisé dans un mode de réalisation préféré du procédé selon l'invention ;
- la figure 5b représente un exemple d'extraction de vecteur et de matrice de caractéristique dans un mode de réalisation préféré du procédé selon l'invention ;
- la figure 6 représente un exemple de projection t-SNE utilisée dans un mode de réalisation préféré du procédé selon l'invention.

DESCRIPTION DETAILLEE

*Architecture*

L'invention concerne un procédé de classification d'au moins une image d'entrée représentative d'une particule 11a-11f présente dans un échantillon 12, dite particule cible. A noter que le procédé peut être mise en œuvre en parallèle pour tout ou partie des particules 11a-11f présentes dans un échantillon 12, chacune étant considérée particule cible à tour de rôle.

Comme l'on verra, ce procédé peut comprendre une ou plusieurs composantes d'apprentissage automatique, et notamment un ou plusieurs classifieurs, y compris un réseau de neurones à convolution, CNN.

Les données d'entrée ou d'apprentissage sont de type image, et représentent la particule cible 11a-11f dans un échantillon 12 (en d'autres termes il s'agit d'images de l'échantillon dans lequel la particule cible est visible). Comme l'on verra, on peut avoir en entrée une séquence d'images de la même particule cible 11a-11f (et le cas échéant une pluralité de séquences d'images de particules 11a-11f de l'échantillon 12 si plusieurs particules sont considérées).

L'échantillon 12 consiste en un liquide tel que de l'eau, une solution tampon, un milieu de culture ou un milieu réactif (comprenant ou non un antibiotique), dans lequel se trouvent les particules 11a-11f à observer.

En variante, l'échantillon 12 peut se présenter sous la forme d'un milieu solide, de préférence translucide, tel qu'une gélose agar-agar, dans lequel se trouvent les particules 11a-11f. L'échantillon 12 peut également être un milieu gazeux. Les particules 11a-11f peuvent se situer à l'intérieur du milieu ou bien à la surface de l'échantillon 12.

Les particules 11a-11f peuvent être des micro-organismes tels que des bactéries, des champignons ou des levures. Il peut également s'agir de cellules, organismes multicellulaires, ou toute autre particule de type particule polluante, poussière. Dans la suite de la description, on prendra l'exemple préféré dans laquelle la particule est une bactérie (et comme l'on verra l'échantillon 12 intègre un antibiotique) La taille des particules 11a-11f observées varie entre 500nm et plusieurs centaines de $\mu$m, voire quelques millimètres.

La « classification » d'une image d'entrée (ou d'une séquence d'images d'entrée) consiste en la détermination d'au moins une classe parmi un ensemble de clases possibles descriptives de l'image. Par exemple, dans le cas de particules de type bactérie, on peut avoir une classification binaire, i.e. deux classes possibles d'effet « division » ou « pas de division », témoignant respectivement d'une résistance ou non à un antibiotique. La présente invention ne sera limitée à aucune sorte de classification particulière, même si on décrira principalement l'exemple d'une classification binaire de l'effet d'un antibiotique sur ladite particule cible 11a-11f.

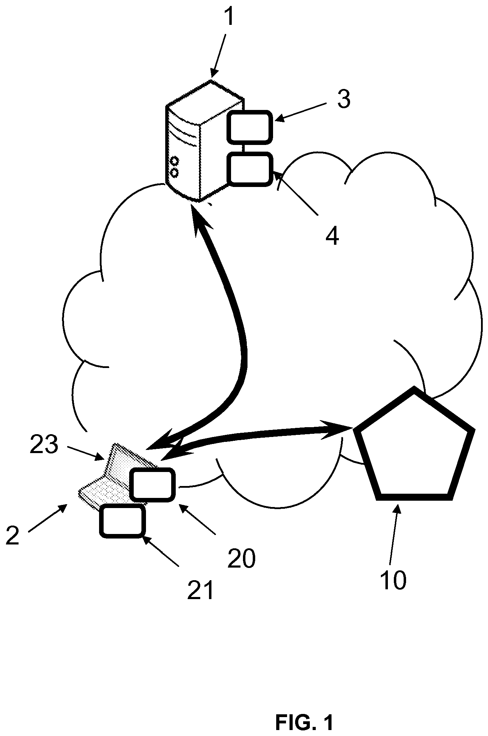

Les présents procédés sont mis en œuvre au sein d'une architecture telle que représentée par la **Figure 1,** grâce à un serveur 1 et un client 2. Le serveur 1 est l'équipement d'apprentissage (mettant en œuvre le procédé d'apprentissage) et le client 2 est un équipement d'utilisation (mettant en œuvre le procédé de classification), par exemple un terminal d'un médecin ou d'un hôpital.

Il est tout à fait possible que les deux équipements 1, 2 soient confondus, mais de façon préférée le serveur 1 est un équipement distant, et le client 2 un équipement grand public, notamment un ordinateur du bureau, un portable, etc. L'équipement client 2 est avantageusement connecté à un dispositif d'observation 10, de sorte à pouvoir directement acquérir ladite image d'entrée (ou comme l'on verra plus loin des données « brutes » d'acquisition telles qu'une image globale de l'échantillon 12, voire des matrices électromagnétiques), typiquement pour la traiter en direct, alternativement on chargera l'image d'entrée sur l'équipement client 2.

Dans tous les cas, chaque équipement 1, 2 est typiquement un équipement informatique distant relié à un réseau local ou un réseau étendu tel que le réseau internet pour l'échange des données. Chacun comprend des moyens de traitement de données 3, 20 de type processeur, et des moyens de stockage de données 4, 21 telle qu'une mémoire informatique, par exemple une mémoire flash ou un disque dur. Le client 2 comprend typiquement une interface utilisateur 22 telle qu'un écran pour interagir.

Le serveur 1 stocke avantageusement une base de données d'apprentissage, i.e. un ensemble d'images de particules 11a-11f dans diverses conditions (voir plus loin) et/ou un ensemble de vecteurs/matrices de caractéristiques déjà classifiés (par exemple associées à des étiquettes « avec division » ou « sans division » signalant la sensibilité ou la résistance à l'antibiotique). A noter que les données d'apprentissage pourront être associés à des étiquettes définissant les conditions de test, par exemple indiquant pour des cultures de bactéries des « souches », « conditions de l'antibiotique », « temps », etc.

*Acquisition*

Même si comme expliqué le présent procédé peut directement prendre en entrée toute image de la particule cible 11a-11f, obtenue d'une manière quelconque. De manière préférée le présent procédé commence par une étape (a) d'obtention de l'image d'entrée à partir de données fournies par un dispositif d'observation 10.

De manière connue, l'homme du métier pourra utiliser des techniques de microscopie holographique numérique DHM, en particulier telles que décrites dans la demande internationale WO2017/207184. En particulier, on pourra acquérir une image en intensité de l'échantillon 12 appelée hologramme, qui n'est pas focalisée sur la particule cible (on parle d'image « out-of-focus »), et qui pourra être traitée par des moyens de traitement de données (intégrés au dispositif 10 ou ceux 20 du client 2 par exemple, voir plus loin). On comprend que l'hologramme « représente » d'une certaine manière toutes les particules 11a-11f dans l'échantillon.

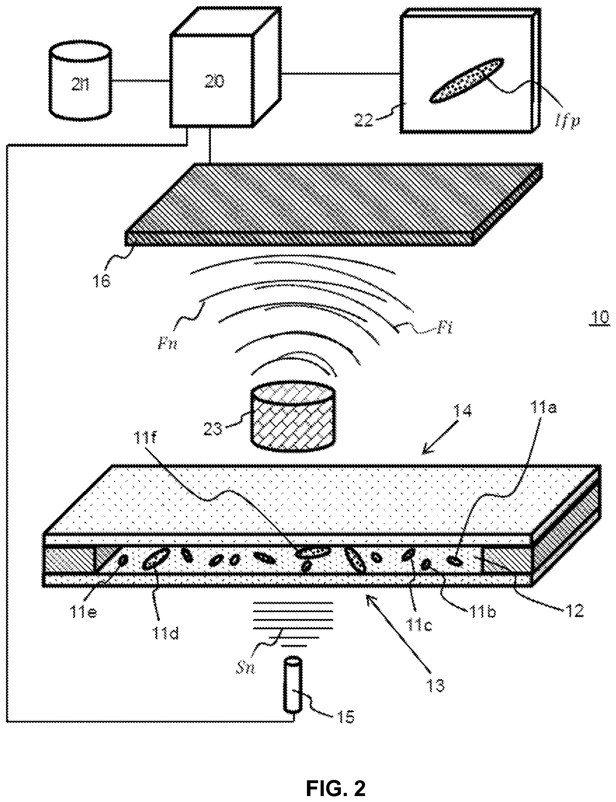

La **Figure 2** illustre un exemple de dispositif d'observation 10 d'une particule 11a-11f présente dans un échantillon 12. L'échantillon 12 est disposé entre une source lumineuse 15, spatialement et temporellement cohérente (e.g. un laser) ou pseudo-cohérente (e.g. une diode électroluminescente, une diode laser), et un capteur numérique 16 sensible dans la gamme spectrale de la source lumineuse. De préférence, la source lumineuse 15 comporte une faible largeur spectrale, par exemple inférieure à 200nm, inférieure à 100nm ou encore inférieure à 25 nm. Dans ce qui suit, il est fait référence à la longueur d'onde d'émission centrale de la source lumineuse, par exemple dans le domaine visible. La source lumineuse 15 émet un signal cohérent Sn orienté sur une première face 13 de l'échantillon, par exemple acheminé par un guide d'onde tel qu'une fibre optique.

L'échantillon 12 (comme expliqué typiquement un milieu de culture) est contenu dans une chambre d'analyse, délimitée verticalement par une lame inférieure et une lame supérieure, par exemple des lames de microscope conventionnelles. La chambre d'analyse est délimitée latéralement par un adhésif ou par tout autre matériau étanche. Les lames inférieure et supérieure sont transparentes à la longueur d'onde de la source lumineuse 15, l'échantillon et la chambre laissant passer par exemple plus de 50% la longueur d'onde de la source lumineuse sous incidence normale sur la lame inférieure.

De préférence, les particules 11a-11f sont disposées dans l'échantillon 12 au niveau de la lame supérieure. La face inférieure de la lame supérieure comprend à cet effet des ligands permettant d'accrocher les particules, par exemple des polycations (e.g. poly-Llysine) dans le cadre de microorganismes Ceci permet de contenir les particules dans une épaisseur égale à, ou proche de, la profondeur de champ du système optique, à savoir dans une épaisseur inférieure à 1mm (e.g. lentille à tube), et de préférence inférieure à $100\mu m$ (e.g. objectif de microscope). Les particules 11a-11f peuvent néanmoins se déplacer dans l'échantillon 12.

De préférence, le dispositif comprend un système optique 23 constitué, par exemple, d'un objectif de microscope et d'une lentille de tube, disposé dans l'air et à distance fixe de l'échantillon. Le système optique 23 est optionnellement équipé d'un filtre pouvant être situé devant l'objectif ou entre l'objectif et la lentille de tube. Le système optique 23 est caractérisé par son axe optique, son plan d'objet, également dénommé plan de mise au point, à une distance de l'objectif, et son plan d'image, conjugué du plan d'objet par le système optique. En d'autres termes, à un objet situé dans le plan d'objet, correspond une image nette de cet objet dans le plan image, également appelé plan focal. Les propriétés optiques du système 23 sont fixes (e.g. optique à focale fixe). Les plans objet et image sont orthogonaux à l'axe optique.

Le capteur d'image 16 est situé, en regard d'une seconde face 14 de l'échantillon, dans le plan focal ou à proximité de ce dernier. Le capteur, par exemple un capteur CCD ou CMOS, comprend un réseau bidimensionnel périodique de sites élémentaires sensibles, et une électronique de proximité qui règle le temps d'exposition et la remise à zéro des sites, d'une manière connue en soi. Le signal de sortie d'un site élémentaire est fonction de la quantité de rayonnement de la gamme spectrale incident sur ledit site pendant la durée d'exposition. Ce signal est ensuite converti, par exemple par l'électronique de proximité, en point image, ou « pixel », d'une image numérique. Le capteur produit ainsi une image numérique sous forme d'une matrice à C colonnes et L lignes. Chaque pixel de cette matrice, de coordonnées (c, l) dans la matrice, correspond d'une manière connue en soi à une position de coordonnées cartésiennes (x(c, l), y(c, l)) dans le plan focal du système optique 23, par exemple la position du centre du site sensible élémentaire de forme rectangulaire.

Le pas et le facteur de remplissage du réseau périodique sont choisis pour respecter le critère Shannon-Nyquist vis-à-vis de la taille des particules observées, de manière à définir au moins deux pixels par particule. Ainsi, le capteur d'image 16 acquiert une image en transmission de l'échantillon dans la gamme spectrale de la source lumineuse.

L'image acquise par le capteur d'image 16 comprend des informations holographiques dans la mesure où elle résulte de l'interférence entre une onde diffractée par les particules 11a-11f et une onde de référence ayant traversé l'échantillon sans avoir interagi avec lui. On comprend évidemment, comme décrit plus haut, que dans le cadre d'un capteur CMOS ou CCD, l'image numérique acquise est une image en intensité, l'information de phase étant donc ici codée dans cette image en intensité.

Alternativement, il est possible de diviser le signal cohérent Sn issu de la source lumineuse 15 en deux composantes, par exemple au moyen d'une lame semi-transparente. La première composante sert alors d'onde de référence et la seconde composante est diffractée par l'échantillon 12, l'image dans le plan image du système optique 23 résultant de l'interférence entre l'onde diffractée et l'onde de référence.

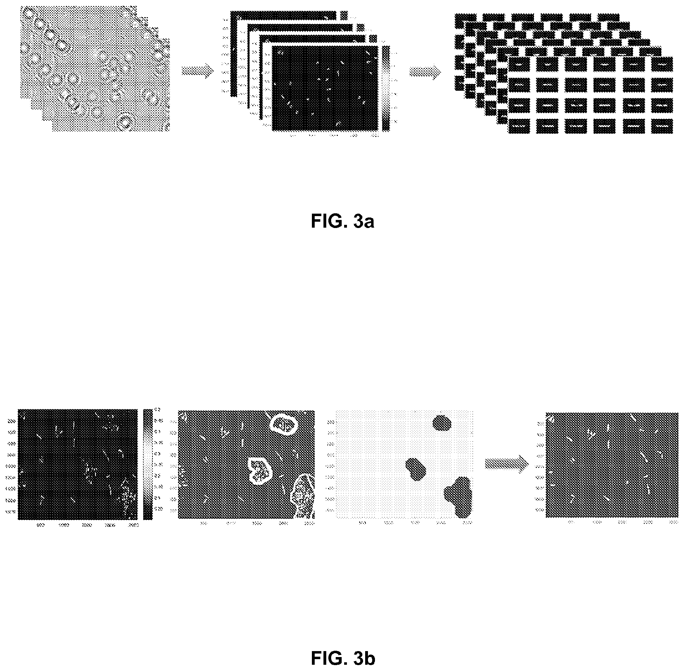

En référence à la **Figure 3a,** il est possible dans l'étape (a) de reconstruire à partir de l'hologramme au moins une image globale de l'échantillon 12, puis d'extraire ladite image d'entrée de l'image globale de l'échantillon.

On comprend en effet que la particule cible 11a-11f doit être représentée d'une manière homogène dans l'image d'entrée, en particulier centrée et alignée selon une direction prédéterminée (par exemple la direction horizontale). Les images d'entrée doivent en outre présenter une taille standardisée (Il est également souhaitable qu'on ne voie que la particule cible 11a-11f dans l'image d'entrée). On appelle ainsi « vignette » (en anglais thumbnail) l'image d'entrée, on peut définir par exemple une taille de 250x250 pixels. Dans le cas d'une séquence d'images d'entrées, on prend par exemple une image par minute pendant un intervalle de temps de 120 minutes, la séquence formant ainsi un « stack » 3D de taille 250x250x120.

La reconstruction de l'image globale est mise en œuvre comme expliqué par des moyens de traitement de données du dispositif 10 ou ceux 20 du client 2.

Typiquement, on construit (pour un instant d'acquisition) une série de matrices complexes nommées « matrices électromagnétiques », modélisant à partir de l'image en intensité de l'échantillon 12 (l'hologramme) le front d'onde lumineux propagé le long de l'axe optique pour une pluralité d'écarts par rapport au plan de mise au point du système optique 23, et en particulier des écarts positionnés dans l'échantillon.

Ces matrices peuvent être projetées dans l'espace réel (par exemple via la norme hermitienne), de sorte à constituer une pile d'images globales à diverses distances de focalisation.

A partir de là on peut déterminer une distance de focalisation moyenne (et sélectionner l'image globale correspondante, ou la recalculer à partir de l'hologramme), voire déterminer une distance de focalisation optimale pour la particule cible (et à nouveau sélectionner l'image globale correspondante, ou la recalculer à partir de l'hologramme).

Dans tous les cas, en référence à la **Figure 3b,** l'étape (a) comprend avantageusement la segmentation de ladite ou lesdites images globales de sorte à détecter ladite particule cible dans l'échantillon, puis le recadrage. En particulier, ladite image d'entrée peut être extraite de l'image globale de l'échantillon, de sorte à représenter ladite particule cible de ladite manière homogène.

En général, la segmentation permet de détecter toutes les particules d'intérêt, en supprimant les artefacts tels que des filaments ou des micro-colonies, de sorte à améliorer la ou les images globales, puis on sélectionne une des particules détectées comme la particules cible, et la vignette correspondante est extraite. Comme expliqué, on peut faire ce travail pour toutes les particules détectées.

La segmentation pourra être mise en œuvre de toute manière connue. Dans l'exemple de la figure 3b, on commence par une segmentation fine pour éliminer les artefacts, puis on met en œuvre une segmentation moins fine pour cette fois détecter les particules 11a-11f. L'homme du métier pourra utiliser toute technique de segmentation connue.

Si l'on souhaite obtenir une séquence d'images d'entrée pour une particule cible 11a-11f, on pourra mettre en œuvre des techniques de tracking pour suivre les éventuels déplacements de la particule d'une image globale à la suivante.

A noter que l'ensemble des images d'entrées obtenus pour un échantillon (pour plusieurs voire toutes les particules de l'échantillon 12, et ce dans le temps) peut être mis en commun pour former une base descriptive de l'échantillon 12 (en d'autres termes une base descriptive de l'expérience), comme l'on voit à droite de la figure 3a, notamment copiée sur les moyens de stockage 21 du client 2. On parle de niveau « champ », par opposition au niveau « particule ». Par exemple, si les particules 11a-11f sont des bactéries et l'échantillon 12 contient (ou non un antibiotique), cette base descriptive contient toutes les informations sur la croissance, la morphologie, la structure interne et les propriétés optiques de ces bactéries sur tout le champ de l'acquisition. Comme l'on verra, cette base descriptive peut être transmise au serveur 1 pour intégration dans ladite base d'apprentissage.

*Extraction de caractéristiques*

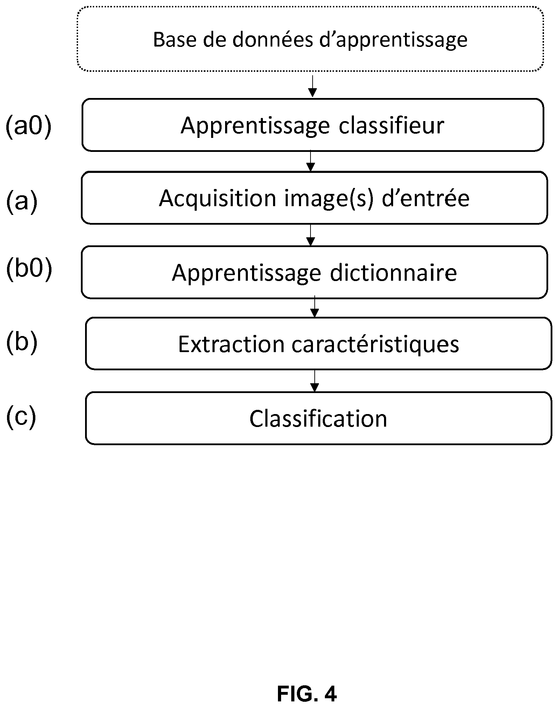

En référence à la **Figure 4,** le présent procédé se distingue particulièrement en ce qu'il sépare une étape (b) d'extraction d'un vecteur de caractéristiques à partir de l'image d'entrée, puis une étape (c) de classification de l'image d'entrée en fonction dudit vecteur de caractéristiques, au lieu de tenter de classifier directement l'image d'entrée. Comme l'on verra, chaque étape peut impliquer un mécanisme indépendant d'apprentissage automatique, d'où le fait que ladite base d'apprentissage du serveur 1 puisse comprendre aussi bien des images de particules que des vecteurs de caractéristiques, et ce pas nécessairement déjà classifiés.

L'étape (b) principale est ainsi une étape d'extraction par les moyens de traitement de données 20 du client 2 d'un vecteur de caractéristiques de ladite particule cible, c'est-à-dire un « codage » de la particule cible.

Dans la suite de la présente description, on fera bien la distinction entre le nombre de « dimensions » des vecteurs/matrices de caractéristiques, au sens géométrique, c'est-à-dire le nombre de directions indépendantes dans lesquelles ces cartes s'étendent (par exemple un vecteur est un objet de dimension 1, et une matrice est un objet de dimension 2, avantageusement de dimension 3), et le nombre de « variables » de ces vecteurs/matrices de caractéristiques, c'est-à-dire la taille selon chaque dimension, i.e. le nombre de degrés de liberté indépendants (qui correspond en pratique à la notion de dimension dans un espace vectoriel - plus précisément, l'ensemble des vecteurs/matrices de caractéristiques ayant un nombre de variables donné constitue un espace vectoriel de dimension égale à ce nombre de variables).

On décrira ainsi plus bas un exemple dans lequel une matrice de caractéristiques extraite à l'issue de l'étape (b) est un objet bidimensionnel (i.e. de dimension 2) de taille 60x25, ayant ainsi 1500 variables.

Ici, la spécificité du présent codage tient dans le fait que lesdites caractéristiques sont des coefficients numériques chacun associé à une image élémentaire d'un ensemble d'images élémentaire chacune représentant une particule de référence tels qu'une combinaison linéaire desdites images élémentaires pondérées par lesdits coefficients approxime la représentation de ladite particule dans l'image d'entrée.

C'est ce que l'appelle le « codage épars » (en anglais « sparse coding »). Lesdites images élémentaires sont appelées « atomes », et l'ensemble des atomes est appelé « dictionnaire ». L'idée du codage épars est d'exprimer toute image d'entrée comme combinaison linéaire desdits atomes, par analogie avec les mots du dictionnaire. Plus précisément, pour un dictionnaire D de dimension $p$, en notant $\alpha$ un vecteur de caractéristiques également de dimension $p$, on cherche la meilleure approximation $D\alpha$ de l'image d'entrée x. En d'autres termes, en notant $\alpha^*$ le vecteur optimal (le sparse code de l'image d'entrée x), l'étape (b) consiste à résoudre un problème de minimisation d'une fonctionnelle avec $\lambda$ un paramètre de régularisation (qui permet de faire un compromis entre la qualité d'approximation et la « sparsity » c'est-à-dire le caractère épars du vecteur, i.e. impliquer le moins d'atomes possible). On peut par exemple poser le problème de minimisation sous contrainte de la sorte :

$$\alpha^* \in \arg\min_{\alpha \in \mathbb{R}^p}[\|\alpha\|_1 \ t.q. \ x = D\alpha]$$

Qu'on peut également exprimer comme un problème de formulation variationelle de la sorte :

$$\alpha^* = \arg\min_{\alpha \in \mathbb{R}^p}\left[\frac{1}{2}\|x - D\alpha\|_2^2 + \lambda\|\alpha\|_1\right]$$

Lesdits coefficients ont avantageusement valeur dans l'intervalle [0 ;1] (c'est plus simple que dans R), et on comprend qu'en général la majorité des coefficients ont pour valeur 0, de fait du caractère « épars » du codage. Les atomes associés à des coefficients non nuls sont appelés atomes activés.

Naturellement, les images élémentaires sont des vignettes comparables aux images d'entrée, i.e. les particules de référence y sont représentées de la même manière homogène que dans l'image d'entrée, en particulier centrées et alignées selon ladite direction prédéterminée, et les images élémentaires ont avantageusement la même taille que les images d'entrée (par exemple 250x250).

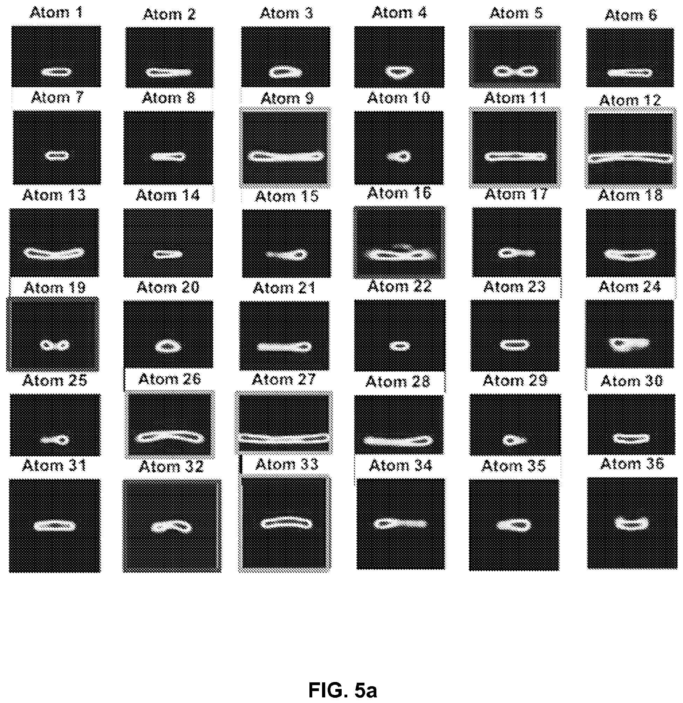

La **Figure 5a** illustre ainsi un exemple de dictionnaire de 36 images élémentaires (cas de la bactérie E. Coli avec l'antibiotique cefpodoxime).

Dans le cas où l'on a une séquence d'images d'entrée, l'étape (b) comprend ainsi avantageusement l'extraction d'un vecteur de caractéristiques par image d'entrée, lesquels peuvent être combinés sous la forme d'une matrice de caractéristiques appelée « profil » de la particule cible. Plus précisément, les vecteurs ont tous la même taille (le nombre d'atomes) et forment une séquence de vecteurs, il suffit donc de les juxtaposer selon l'ordre des images d'entrée de sorte à obtenir un sparse code bidimensionnel (qui code l'information spatio-temporelle, d'où les deux dimensions).

Alternativement ou en complément, on peut sommer les vecteurs/matrices de caractéristiques correspondant à plusieurs images d'entrées associées à plusieurs particules 11a-11f de l'échantillon 12.

La présente technique permet ainsi d'obtenir un vecteur de caractéristique de niveau sémantique élevé et ce sans nécessité ni une forte puissance de calcul ni une base de données annotées.

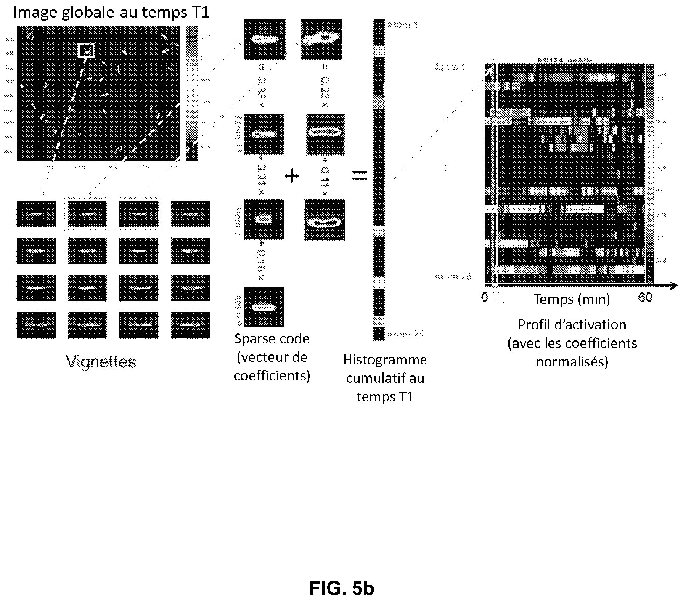

La **Figure 5b** représente un autre exemple d'extraction d'un vecteur de caractéristiques, cette fois avec un dictionnaire de 25 atomes. On voit la totalité de l'image globale obtenue à un temps T1 donné, et les différentes images d'entrée extraites (correspondant aux particules détectées). Ainsi, l'image représentant la 2$^e$ particule cible peut être approximée comme 0.33 fois l'atome 13 plus 0.21 fois l'atome 2 plus 0.16 fois l'atome 9 (soit un vecteur (0 ; 0.21 ; 0 ; 0 ; 0 ; 0 ; 0 ; 0 ; 0.16 0 ; 0 ; 0 ; 0.33 ; 0 ; 0 ; 0 ; 0 ; 0 ; 0 ; 0 ; 0 ; 0 ; 0 ; 0).

Le vecteur sommé, dit « histogramme cumulatif » est représenté au milieu. Avantageusement, les coefficients sont normalisés de sorte à ce que leur somme soit égale à 1. La matrice sommée (sur 60 minutes), dite « profil d'activation » est représentée à droite, on voit qu'elle présente ainsi une taille 60x25.

On comprend que ce profil d'activation est une carte de caractéristiques de haut niveau représentative de l'échantillon 12 (au cours du temps).

*Apprentissage des atomes*

Les images de références (les atomes) peuvent être prédéfinis. Toutefois, de manière préférée, le procédé comprend une étape (b0) d'apprentissage, en particulier par les moyens de traitement de données 3 du serveur 1, à partir d'une base d'apprentissage, des images de référence (i.e. du dictionnaire), de sorte que tout le procédé peut ne nécessiter aucune intervention humaine.

Cette méthode d'apprentissage, dite « dictionnary learning » puisqu'il s'agit d'apprendre un dictionnaire, est non-supervisée dans la mesure où elle ne nécessite pas d'annoter les images de la base d'apprentissage, et est donc d'une simplicité maximale à mettre en œuvre. En effet, on comprend qu'annoter à la main des milliers d'images serait très long et très couteux.

L'idée est simplement de disposer dans la base d'apprentissage de vignettes représentant des particules 11a-11f dans des conditions variées, et à partir de là on va pouvoir trouver les atomes permettant de représenter le plus facilement possible n'importe quelle vignette.

De manière préférée, on peut avoir des dictionnaires différents par type de particule 11a-11f et/ou par type d'échantillon 12. En particulier, dans le mode de réalisation dans lequel les particules 11a-11f sont des bactéries, on a un dictionnaire par type de bactérie et par antibiotique. Les conditions variées s'obtiennent en particulier en utilisant diverses concentrations d'antibiotiques. On peut toutefois envisager d'avoir une même base d'apprentissage pour plusieurs antibiotiques, etc.

A noter que cette étape (b0) peut être mise en œuvre très en amont ou attendre le résultat de l'étape (a) (la base représentative de l'expérience en cours) pour affiner le résultat.

En tout état de cause, l'apprentissage peut être mise en œuvre de toute façon connue de l'homme du métier, et notamment à nouveau correspondre à un problème d'optimisation. Si on note $x_i, i \leq N$ les images de la base d'apprentissage, le problème est ainsi par exemple posé :

$$\min_{D \in C, \alpha \in \mathbb{R}^{p \times N}} \sum_{i=1}^{N} (\frac{1}{2} \|x_i - D\alpha_i\|_2^2 + \lambda \|\alpha_i\|_1)$$

Le but est en effet de trouver le dictionnaire D permettant la meilleure approximation $D\alpha_i$ de chaque image d'apprentissage $x_i$.

On pourra par exemple mettre en œuvre l'apprentissage en utilisant la toolbox SPAMS (« SPArse Modeling Software »).

Les 36 atomes de la figure 5a ont ainsi été appris à partir d'une base de données de plusieurs dizaines de milliers d'images d'entrées acquises pendant 61 minute de culture de 6 souches d'E. Coli (2 souches non-résistantes et 4 souches résistantes), avec jusqu'à 4 concentrations différentes de cefpodoxime (plus le cas d'absence d'antibiotique). Les 36 atomes ont été obtenus en choisissant un paramètre de régularisation $\lambda$ la valeur 0.2. Les atomes 5, 16, 19 et 32 correspondent à une bactérie en cours de division (normale), alors que les atomes 9, 11, 12, 26, 27 et 33 montrent des changements morphologiques induits par la cefpodoxime.

D'autres dictionnaires ont pu être appris avec succès pour d'autres bactéries tel que S. Aureus et/ou d'autres antibiotiques tels que la cefoxitine, la gentamicine, etc.

*Classification*

Dans une étape (c), ladite image d'entrée est classifiée en fonction dudit vecteur de caractéristiques extrait.

On comprend que toute technique permettant une analyse descriptive du ou des vecteurs/matrices de caractéristiques pourra être utilisée, en particulier des classifieurs appris sur ladite base de données d'apprentissage, on en verra plusieurs exemples. A ce titre, à l'instar de l'étape (b0), le procédé peut comprendre une étape (a0) d'apprentissage, par les moyens de traitement de données 3 du serveur 1, à partir d'une base d'apprentissage, du classifieur. Cette étape est en effet typiquement mise en œuvre très en amont, en particulier par le serveur 1 distant. Comme expliqué, la base d'apprentissage peut comprendre un certain nombre de vecteurs/matrices de caractéristiques d'images d'apprentissage, i.e. leurs sparse codes, ce qui prend très peu de place.

Le sparse code obtenu à l'étape (b) (en particulier en cas de matrice) peut avoir un nombre de variables très élevé de sorte que la visualisation et l'interprétation des résultats d'analyse est complexe, et il est préférable d'utiliser des techniques de réduction.

On peut à ce titre utiliser l'algorithme t-SNE (t-distributed stochastic neighbor embedding), qui est une méthode non-linéaire de réduction du nombre de variables pour la visualisation de données, permettant de représenter un ensemble de points d'un espace à grande dimension (l'espace de valeur des sparse codes/profils d'activation) dans un espace de deux ou trois dimensions, les données peuvent ensuite être visualisées avec un nuage de points. L'algorithme t-SNE tente de trouver une configuration optimale (dite projection t-SNE, en anglais « embedding ») selon un critère de théorie de l'information pour respecter les proximités entre points : deux points qui sont proches (respectivement éloignés) dans l'espace d'origine devront être proches (respectivement éloignés) dans l'espace de faible dimension.

L'algorithme t-SNE peut être mis en œuvre aussi bien au niveau particule (une particule cible 11a-11f par rapport aux particules individuelles pour lesquelles on dispose dans la base d'apprentissage d'un vecteur) qu'au niveau champ (pour tout l'échantillon 12 - cas d'une pluralité d'images d'entrée représentant une pluralité de particules 11a-11f), en particulier dans le cas de vecteurs seuls plutôt que de matrices de caractéristiques.

A noter que la projection t-SNE peut être faite de manière efficace grâce notamment à des implémentations par exemple sous python de sorte à pouvoir être réalisée en temps réel. On peut également pour accélérer les calculs et réduire l'empreinte mémoire, passer par une première étape de réduction linéaire de la dimensionnalité (par exemple l'ACP - Analyse aux Composantes Principales) avant de calculer la projections t-SNE de la base d'apprentissage et de l'image d'entrée considérée. Dans ce cas on peut stocker en mémoire les projections par ACP de la base d'apprentissage, il n'y a plus qu'à terminer la projection avec le sparse code de l'image d'entrée considérée.

Pour le classifieur à proprement parler, on peut utiliser la méthode des k plus proches voisins (k-nearest neighbors, k-NN), en particulier basée sur le résultat de l'algorithme t-SNE (la projection, ou « embedding » obtenue).

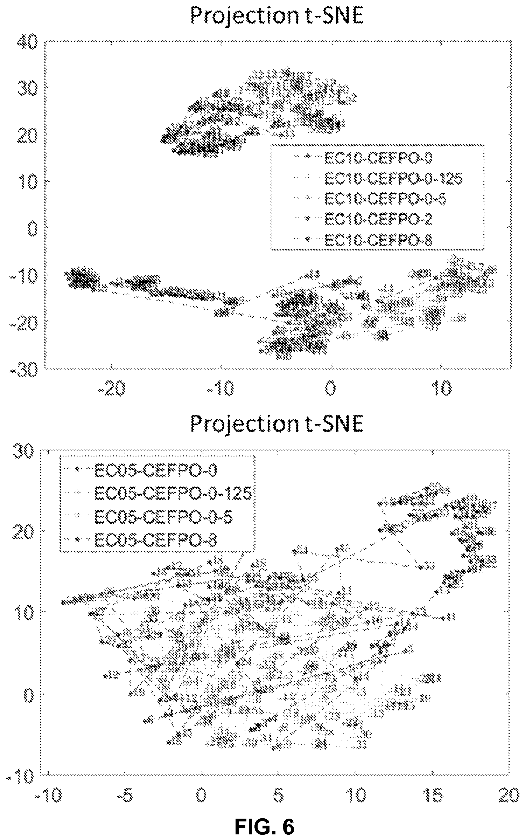

L'idée est de regarder les points voisins du point correspondant au vecteur de caractéristiques de la ou les image d'entrée considérée, et de regarder leur classification. Par exemple, si les points voisins sont classés « pas de division », on peut supposer que l'image d'entrée considérée doit être classés « pas de division ». A noter qu'on peut éventuellement limiter les voisins considérés, par exemple ne fonction de la souche, de l'antibiotique, etc. La **Figure 6** montre deux exemples d'embeddings t-SNE obtenus pour une souche d'E. Coli pour diverses concentrations de cefpodoxime. Dans l'exemple du haut on voit clairement deux blocs, permettant de montrer visuellement l'existence d'une concentration minimale inhibitrice (minimum inhibitory concentration (MIC)) à partir de laquelle on a un impact sur la morphologie et donc la division cellulaire. On pourra classer un vecteur tombant à proximité de la partie haute comme « division » et un vecteur tombant à proximité de la partie basse comme « pas de division ». Dans l'exemple du bas on voit qu'uniquement la concentration la plus élevée se détache (et semble donc avoir un effet antibiotique).

Selon un deuxième mode de réalisation, on utilise comme classifieur une machine à vecteur de support (support vector machine, SVM), toujours pour une classification binaire (par exemple à nouveau « division » ou « pas de division »). Cette méthode simple est particulièrement efficace sur les images d'entrée simples (SVM appliqué aux vecteurs de caractéristiques). L'hyper-paramètre C du SVM peut être optimisé en utilisant une recherche de grille et une validation croisée (dite « k-folds » avec en particulier k=5, dans laquelle on divise la base originale en k échantillons, puis on sélectionne un des k échantillons comme ensemble de validation et les k-1 autres échantillons constitueront l'ensemble d'apprentissage).

Selon un troisième mode de réalisation, dans le cas où l'on a des séquences d'images d'entrée (stack 3D) et donc des matrices de caractéristiques, on utilise comme classifieur un réseau de neurones à convolution (CNN).

On pourra pour ce CNN choisit des architectures relativement simples, par exemple une succession de blocs d'une couche de convolution, une couche d'activation (fonction ReLU par exemple) et une couche de mise en commun (pooling, par exemple du max pooling). Deux tels blocs suffisent pour un classification binaire efficace. On peut par ailleurs sous-échantillonner les entrées (en particulier sur la dimension « temporelle ») pour encore réduire son empreinte mémoire.

L'apprentissage du CNN peut être réalisé de façon classique. La fonction de coût d'apprentissage peut être composée d'une attache aux données classique - par exemple entropie croisée - et d'une régularisation par variation totale.

Dans tous les modes de réalisation, le classifieur appris peut être stocké le cas échéant sur des moyens de stockage de données 21 du client 2 pour utilisation en classification. A noter que le même classifieur peut être embarqué sur de nombreux clients 2, un seul apprentissage est nécessaire.

*Produit programme d'ordinateur*

Selon un deuxième et un troisième aspects, l'invention concerne un produit programme d'ordinateur comprenant des instructions de code pour l'exécution (en particulier sur les moyens de traitement de données 3, 20 du serveur 1 et/ou du client 2) d'un procédé de classification d'au moins une image d'entrée représentant une particule cible 11a-11f dans un échantillon 12, ainsi que des moyens de stockage lisibles par un équipement informatique (une mémoire 4, 21 du serveur 1 et/ou du client 2) sur lequel on trouve ce produit programme d'ordinateur.

**Revendications**

1. Procédé de classification d'au moins une image d'entrée représentant une particule cible (11a-11f) dans un échantillon (12), le procédé comprenant la mise en œuvre, par des moyens de traitement de données (20) d'un client (2), d'étapes de :

   (b) Extraction d'un vecteur de caractéristiques de ladite particule cible (11a-11f), lesdites caractéristiques étant des coefficients numériques chacun associés à une image élémentaire d'un ensemble d'images élémentaire chacune représentant une particule de référence tels qu'une combinaison linéaire desdites images élémentaires pondérées par lesdits coefficients approxime la représentation de ladite particule cible (11a-11f) dans l'image d'entrée ;
   (c) Classification de ladite image d'entrée en fonction dudit vecteur de caractéristiques extrait,

   le procédé étant **caractérisé en ce qu'**il comprend une étape (b0) d'apprentissage non-supervisé, à partir d'une base d'images d'apprentissage de particules (11a-11f) dans ledit échantillon (12), des images élémentaires, dans lequel les images élémentaires apprises sont celles permettant la meilleure approximation des représentations des particules (11a-11f) dans les images d'apprentissage par une combinaison linéaire desdites images élémentaires.

2. Procédé selon la revendication 1, dans lequel les particules (11a-11f) sont représentées d'une manière homogène dans l'image d'entrée et dans chaque image élémentaire, en particulier centrées et alignées selon une direction prédéterminée.

3. Procédé selon la revendication 2, comprenant une étape (a) d'extraction de ladite image d'entrée d'une image globale de l'échantillon, de sorte à représenter ladite particule cible (11a-11f) de ladite manière homogène

4. Procédé selon la revendication 3, dans lequel l'étape (a) comprend la segmentation de ladite image globale de sorte à détecter ladite particule cible (11a-11f) dans l'échantillon (12), puis le recadrage de l'image d'entrée sur ladite particule cible (11a-11f) détectée.

5. Procédé selon l'une des revendications 3 et 4, dans lequel l'étape (a) comprend l'obtention de ladite image globale à partir d'une image en intensité de l'échantillon (12) acquise par un dispositif d'observation (10).

6. Procédé selon l'une des revendications 1 à 5, dans lequel l'étape (c) est mise en œuvre au moyen d'un classifieur, le procédé comprenant une étape (a0) d'apprentissage, par des moyens de traitement de données (3) d'un serveur (1), des paramètres dudit classifieur à partir d'une base d'apprentissage de vecteurs/matrices de caractéristiques déjà classifiées de particules (11a-11f) dans un échantillon (12).

7. Procédé selon la revendication 6, dans lequel ledit classifieur est choisi parmi une machine à vecteur de support, un algorithme des k plus proches voisins, ou un réseau de neurones à convolution.

8. Procédé selon l'une des revendications 1 à 7, dans lequel l'étape (c) comprend une réduction du nombre de variables du vecteur de caractéristiques au moyen de l'algorithme t-SNE.

9. Procédé selon l'une des revendications 1 à 8, de classification d'une séquence d'images d'entrée représentant ladite particule cible (11a-11f) dans un échantillon (12) au cours du temps, dans lequel l'étape (b) comprend l'obtention d'une matrice de caractéristiques de ladite particule cible (11a-11f) en concaténant les vecteurs de caractéristiques extraits pour chaque image d'entrée de ladite séquence.

10. Système de classification d'au moins une image d'entrée représentant une particule cible (11a-11f) dans un échantillon (12) comprenant au moins un client (2) comprenant des moyens de traitement de données (20) configurés pour implémenter :

- l'extraction d'un vecteur de caractéristiques de ladite particule cible (11a-11f), lesdites caractéristiques étant des coefficients numériques chacun associés à une image élémentaire d'un ensemble d'images élémentaire chacune représentant une particule de référence tels qu'une combinaison linéaire desdites images élémentaires pondérées par lesdits coefficients approxime la représentation de ladite particule cible (11a-11f) dans l'image d'entrée ;
- la classification de ladite image d'entrée en fonction dudit vecteur de caractéristiques extrait,

ledit système étant **caractérisé en ce que** lesdits moyens de traitement de données sont en outre configurés pour implémenter

- l'apprentissage non-supervisé, à partir d'une base d'images d'apprentissage de particules (11a-11f) dans ledit échantillon (12), des images élémentaires, les images élémentaires apprises étant celles permettant la meilleure approximation des représentations des particules (11a-11f) dans les images d'apprentissage par une combinaison linéaire desdites images élémentaires.

11. Système selon la revendication 10, comprenant en outre un dispositif d'observation (10) de ladite particule cible (11a-11f) dans l'échantillon (12).

12. Produit programme d'ordinateur comprenant des instructions de code pour l'exécution d'un procédé selon l'une des revendications 1 à 9 de classification d'au moins une image d'entrée représentant une particule cible (11a-11f) dans un échantillon (12), lorsque ledit programme est exécuté sur un ordinateur.

13. Moyen de stockage lisible par un équipement informatique sur lequel un produit programme d'ordinateur comprend des instructions de code pour l'exécution d'un procédé selon l'une des revendications 1 à 9 de classification d'au moins une image d'entrée représentant une particule cible (11a-11f) dans un échantillon (12).

**Patentansprüche**

1. Verfahren zur Klassifikation mindestens eines Eingabebilds, das ein Zielteilchen (11a-11f) in einer Probe (12) darstellt, wobei das Verfahren die Durchführung, durch Datenverarbeitungseinrichtungen (20) eines Clients (2), von Schritten umfasst zur:

(b) Extraktion eines Merkmalsvektors des Zielteilchens (11a-11f), wobei die Merkmale digitale Koeffizienten sind, von denen jeder einem elementaren Bild einer Menge von elementaren Bildern zugeordnet ist, von denen jedes ein Referenzteilchen darstellt, derart, dass eine lineare Kombination der durch die Koeffizienten gewichteten elementaren Bilder die Darstellung des Zielteilchens (11a-11f) in dem Eingabebild approximiert;

(c) Klassifikation des Eingabebilds in Abhängigkeit von dem extrahierten Merkmalsvektor, wobei das Verfahren **dadurch gekennzeichnet ist, dass** es einen Schritt (b0) des nicht überwachten Lernens, ausgehend von einer Datenbank mit Lernbildern von Teilchen (11a-11f) in der Probe (12), der elementaren Bilder umfasst, wobei die gelernten elementaren Bilder diejenigen sind, die die beste Approximation der Darstellungen der Teilchen (11a-11f) in den Lernbildern durch eine lineare Kombination der elementaren Bilder gestatten.

2. Verfahren nach Anspruch 1, wobei die Teilchen (11a-11f) in dem Eingabebild und in jedem elementaren Bild auf homogene Weise dargestellt sind, insbesondere zentriert und entlang einer vorbestimmten Richtung ausgerichtet sind.

3. Verfahren nach Anspruch 2, umfassend einen Schritt (a) der Extraktion des Eingabebilds aus einem Gesamtbild der Probe, sodass das Zielteilchen (11a-11f) auf die homogene Weise dargestellt wird.

4. Verfahren nach Anspruch 3, wobei der Schritt (a) das Segmentieren des Gesamtbilds, sodass das Zielteilchen (11a-11f) in der Probe (12) detektiert wird, dann das Zuschneiden des Eingabebilds auf das detektierte Zielteilchen (11a-11f) umfasst.

5. Verfahren nach einem der Ansprüche 3 und 4, wobei der Schritt (a) das Erhalten des Gesamtbilds ausgehend von einem von einer Betrachtungsvorrichtung (10) erfassten Intensitätsbild der Probe (12) umfasst.

6. Verfahren nach einem der Ansprüche 1 bis 5, wobei der Schritt (c) mit Hilfe eines Klassifikators durchgeführt wird, wobei das Verfahren einen Schritt (a0) des Lernens, durch Datenverarbeitungseinrichtungen (3) eines Servers (1), der Parameter des Klassifikators ausgehend von einer Lerndatenbank mit bereits klassifizierten Merkmalsvektoren/-matrizen von Teilchen (11a-11f) in einer Probe (12) umfasst.

7. Verfahren nach Anspruch 6, wobei der Klassifikator aus einer Support-Vektor-Maschine, einem k-nächste-Nachbarn-Algorithmus oder einem neuronalen Faltungsnetzwerk ausgewählt wird.

8. Verfahren nach einem der Ansprüche 1 bis 7, wobei der Schritt (c) eine Reduzierung der Anzahl von Variablen des Merkmalsvektors mit Hilfe des t-SNE-Algorithmus umfasst.

9. Verfahren nach einem der Ansprüche 1 bis 8 zur Klassifikation einer Sequenz von Eingabebildern, die das Zielteilchen (11a-11f) in einer Probe (12) im Zeitverlauf darstellt, wobei der Schritt (b) das Erhalten einer Merkmalsmatrix des Zielteilchens (11a-11f) durch das Verketten der extrahierten Merkmalsvektoren für jedes Eingabebild der Sequenz umfasst.

10. System zur Klassifikation mindestens eines Eingabebilds, das ein Zielteilchen (11a-11f) in einer Probe (12) darstellt, umfassend mindestens einen Client (2), der Datenverarbeitungseinrichtungen (20) umfasst, die ausgestaltet sind zum Implementieren:

- der Extraktion eines Merkmalsvektors des Zielteilchens (11a-11f), wobei die Merkmale digitale Koeffizienten sind, von denen jeder einem elementaren Bild einer Menge von elementaren Bildern zugeordnet ist, von denen jedes ein Referenzteilchen darstellt, derart, dass eine lineare Kombination der durch die Koeffizienten gewichteten elementaren Bilder die Darstellung des Zielteilchens (11a-11f) in dem Eingabebild approximiert;

- der Klassifikation des Eingabebilds in Abhängigkeit von dem extrahierten Merkmalsvektor, wobei das System **dadurch gekennzeichnet ist, dass** die Datenverarbeitungseinrichtungen ferner ausgestaltet sind zum Implementieren

- des nicht überwachten Lernens, ausgehend von einer Datenbank mit Lernbildern von Teilchen (11a-11f) in der Probe (12), der elementaren Bilder, wobei die gelernten elementaren Bilder diejenigen sind, die die beste Approximation der Darstellungen der Teilchen (11a-11f) in den Lernbildern durch eine lineare Kombination der elementaren Bilder gestatten.

11. System nach Anspruch 10, umfassend ferner eine Vorrichtung zum Betrachten (10) des Zielteilchens (11a-11f) in der Probe (12).

12. Computerprogrammprodukt, das Codeanweisungen umfasst, die bei der Ausführung des Programms auf einem Computer ein Verfahren nach einem der Ansprüche 1 bis 9 zur Klassifikation mindestens eines Eingabebilds, das ein Zielteilchen (11a-11f) in einer Probe (12) darstellt, ausführen.

13. Speichermedium, das von einer informationstechnischen Vorrichtung lesbar ist und auf dem ein Computerprogrammprodukt Codeanweisungen zur Ausführung eines Verfahrens nach einem der Ansprüche 1 bis 9 zur Klassifikation mindestens eines Eingabebilds, das ein Zielteilchen (11a-11f) in einer Probe (12) darstellt, umfasst.

**Claims**

1. A method for classifying at least one input image representing a target particle (11a-11f) in a sample (12), the method being **characterized in that** it comprises implementation, by data-processing means (20) of a client (2), of steps of:

   (b) extraction of a feature vector of features of said target particle (11a-11f), said features being numerical coefficients each associated with one elementary image of a set of elementary images each representing a reference particle such that a linear combination of said elementary images weighted by said coefficients approximates the representation of said target particle (11a-11f) in the input image;
   (c) classification of said input image depending on said extracted feature vector,

   The method being **characterized by** comprising a step (b0) of unsupervised learning, using a database of training images of particles (11a-11f) in said sample (12), of the elementary images, wherein the learnt reference images are those that allow the best approximation of the representations of the particles (11a-11f) in the training images by a linear combination of said elementary images.

2. The method as claimed in claim 1, wherein the particles (11a-11f) are represented in a uniform manner in the input image and in each elementary image, and in particular centered on and aligned in a predetermined direction.

3. The method as claimed in claim 2, comprising a step (a) of extracting said input image from an overall image of the sample, so as to represent said target particle (11a-11f) in said uniform manner.

4. The method as claimed in claim 3, wherein step (a) comprises segmentation of said overall image so as to detect said target particle (11a-11f) in the sample (12), then cropping of the input image to said detected target particle (11a-11f).

5. The method as claimed in one of claims 3 and 4, wherein step (a) comprises obtaining said overall image from an intensity image of the sample (12), said image being acquired by an observing device (10).

6. The method as claimed in one of claims 1 to 5, wherein step (c) is implemented by means of a classifier, the method comprising a step (a0) of training, by data-processing means (3) of a server (1), parameters of said classifier using a training database of already classified feature vectors/matrices of particles (11a-11f) in a sample (12).

7. The method as claimed in claim 6, wherein said classifier is chosen from a support vector machine, a k-nearest neighbor algorithm, or a convolutional neural network.

8. The method as claimed in one of claims 1 to 9, wherein step (c) comprises a reduction of the number of variables of the feature vector, by means of the t-SNE algorithm.

9. The method as claimed in one of claims 1 to 8, for classifying a sequence of input images representing said target particle (11a-11f) in a sample (12) over time, wherein step (b) comprises obtaining a feature matrix of said target particle (11a-11f) by concatenating the extracted feature vectors of each input image of said sequence.

10. A system for classifying at least one input image representing a target particle (11a-11f) in a sample (12) comprising at least one client (2) comprising data-processing means (20) configured to implement:

    - extraction of a feature vector of features of said target particle (11a-11f), said features being numerical coefficients each associated with one elementary image of a set of elementary images each representing a reference particle such that a linear combination of said elementary images weighted by said coefficients approximates the representation of said target particle (11a-11f) in the input image;
    - classification of said input image depending on said extracted feature vector,

    said system being **characterized in that** said data-processing means are further configured to implement unsupervised learning, using a database of training images of particles (11a-11f) in said sample (12), of the elementary images, wherein the learnt reference images are those that allow the best approximation of the representations of the particles (11a-11f) in the training images by a linear combination of said elementary images

11. The system as claimed in claim 10, further comprising a device (10) for observing said target particle (11a-11f) in the sample (12).

12. A computer program product comprising code instructions for executing a method as claimed in one of claims 1 to 9 for classifying at least one input image representing a target particle (11a-11f) in a sample (12), when said program is executed on a computer.

13. A storage medium readable by a piece of computer equipment, on which a computer program product comprises code instructions for executing a method as claimed in one of claims 1 to 9 for classifying at least one input image representing a target particle (11a-11f) in a sample (12).

**FIG. 1**

**FIG. 2**

**FIG. 3a**

**FIG. 3b**

Base de données d'apprentissage

(a0)  Apprentissage classifieur

(a)  Acquisition image(s) d'entrée

(b0)  Apprentissage dictionnaire

(b)  Extraction caractéristiques

(c)  Classification

**FIG. 4**

FIG. 5a

Image globale au temps T1

Vignettes

Sparse code
(vecteur de
coefficients)

Histogramme
cumulatif au
temps T1

Profil d'activation
(avec les coefficients
normalisés)

Temps (min)

**FIG. 5b**

FIG. 6

## RÉFÉRENCES CITÉES DANS LA DESCRIPTION

**Documents brevets cités dans la description**

- EP 2603601 A

- WO 2017207184 A

**Littérature non-brevet citée dans la description**

- **MYUNG K.KIM**. Principles and techniques of digital holographie microscopy. *SPIE Reviews*, January 2010, vol. 1 (I)

- Simultaneous Sparsity Model for Histopathological Image Representation and Classification. **SRINIVAS UMAMAHESH et al.** IEEE TRANSACTIONS ON MEDICAL IMAGING. IEEE, 01 May 2014, vol. 33, 1163-1179